# EUROPÄISCHE PATENTANMELDUNG

(11) **EP 1 416 190 A2**
(43) Veröffentlichungstag der Anmeldung: **06.05.2004**
(21) Anmeldenummer: 03023483.5
(22) Anmeldetag: 18.10.2003
(51) Int. Cl.: F16H 1/22

(54) **Leistungsverzweigtes Winkelgetriebe**

(30) Priorität: 30.10.2002 DE 10250439
(71) Anmelder: DEERE & COMPANY, Moline, Illinois 61265-8098 (US)
(72) Erfinder: Buhrke, Frank, 69469 Weinheim (DE)
(74) Vertreter: Holst, Sönke, Dr.

(57) **Zusammenfassung**

Es wird ein leistungsverzweigtes Winkelgetriebe beschrieben, welches eine leistungsverzweigende doppelte Kegelradstufe (12) und ein nachgeschaltetes Summierungsgetriebe (14) enthält.

Um ein kompaktes leistungsverzweigtes Winkelgetriebe (10) zu schaffen, wird vorgeschlagen, ein Zwischenkegelrad (16) zwischen zwei spiegelbildlich angeordneten Tellerrädern (24, 26) zu positionieren, wobei das Zwischenkegelrad (16) gleichzeitig mit beiden Tellerrädern (24, 26) in Eingriff steht. Das erste Tellerrad (24) ist fest mit einem Zahnrad (34) verbunden, welches als Sonnenrad eines einstufigen Planetengetriebes (14) dient. Das zweite Tellerrad (26) ist fest mit einem Hohlrad (36) verbunden. Zwischen Hohlrad (36) und Sonnenrad (34) wälzen sich Planeten (44) ab, die mit einem Planetenträger (46) verbunden sind. Durch die Relativbewegung der Planeten (44) zwischen Hohlrad (36) und Sonnenrad (34) findet auf dem Planetenträger (46) eine Summierung der beiden Leistungszweige mit insgesamt sehr hoher Übersetzungsrate statt.

## Beschreibung

Die Erfindung betrifft ein leistungsverzweigtes Winkelgetriebe mit einer doppelten Kegelradstufe und einem der Kegelradstufe nachgeschalteten Summierungsgetriebe, wobei die Kegelradstufe durch ein Zwischenkegelrad angetrieben wird und ein erstes und ein zweites Kegelrad enthält, und wobei die Kegelräder spiegelbildlich zueinander angeordnet sind und gegenläufig abwälzen.

Winkelgetriebe bestehen in der Regel aus zwei miteinander kämmenden Kegelrädern, die entsprechend einer gewünschten Übersetzung einen unterschiedlichen Durchmesser aufweisen. Häufig wird dazu ein relativ kleines Ritzel als antreibendes Kegelrad verwendet, welches ein im Verhältnis dazu großes Tellerrad antreibt, um eine hohe Untersetzung bzw. die Übertragung hoher Drehmomente zu erzielen. In speziellen Einsatzgebieten, bei denen kompakte Bauweisen mit gleichzeitiger Gewährleistung hoher Untersetzungen bzw. Übersetzungen gefordert sind, wie es beispielsweise bei Kraftfahrzeugen oder bei Land- und Baumaschinen bzw. Nutzfahrzeugen sowie eventuell auch bei Werkzeugmaschinen der Fall ist, stoßen bisher verwendete Winkelgetriebe an ihre Leistungsgrenzen. Insbesondere in Verbindung mit Antriebskomponenten, wie z. B. Differentialgetrieben bzw. Differentialen sind Winkelgetriebe in kompakter Bauweise und mit hohen Untersetzungen bzw. Übersetzungen und mit hoher Leistungsübertragung gefragt. Das Erfordernis nach hoher Leistungsübertragung führt bei Winkelgetrieben insbesondere zu schwer überwindbaren Problemen bei der Ausführung der Kegelradlagerung, bei der Auslegung der Antriebs- und Abtriebsachsen hinsichtlich zulässiger Durchbiegungen, sowie bei der Werkstoffauswahl bezüglich notwendiger Festigkeiten zur Übertragung der geforderten Kräfte. Diese Probleme können oft nur zu Lasten der Baugröße und Komplexität bzw. Teilevielfalt und den damit verbundenen höheren Kosten des Getriebes gelöst werden.

Um die mögliche Leistungsübertragung am Winkeltrieb zu erhöhen wurden Winkeltriebe entwickelt, die mit dem Hintergrund der Leistungsverzweigung, doppelte, spiegelbildlich angeordnete Kegelradstufen aufweisen, deren Leistungszweige über zusätzliche Getriebekomponenten oder Zusatzgetriebe bzw. Summiergetriebe wieder zusammengeführt werden. Damit wird erzielt, dass die übertragbaren Eingangskräfte auf zwei Kegelradstufen aufgeteilt werden. Damit können die erforderlichen Abmaße der Tellerräder reduziert und kleinere Bauweisen erzielt werden.

Durch die DE 100 65 107 A1 wird beispielsweise ein Winkelgetriebe mit Leistungsverzweigung offenbart, welches ein Kegelrad aufweist, das mit zwei spiegelbildlich angeordneten Tellerrädern kämmt. Die Leistungszusammenführung erfolgt durch zusätzlich zwischen den Tellerrädern angeordnete Zwischenräder. Bauartbedingt untersetzt bzw. übersetzt dieses Getriebe lediglich nur um das Verhältnis von Hauptwelle und Tellerrad und kann damit nur beschränkte Untersetzungen bzw. Übersetzungen liefern. Die Untersetzung bzw. Übersetzung ist hierbei direkt mit einer Zunahme des Bauvolumens bzw. einer Zunahme des Durchmessers der Tellerräder verbunden. Für die Verwendung als kompakte Antriebskomponente ist dieses Winkelgetriebe daher eher ungeeignet.

Des Weiteren offenbart die DE 40 41 898 A1 ein Winkelgetriebe mit Leistungsverzweigung, welches einander treibende Kegelräder aufweist, wobei ein als Zwischenkegelrad ausgebildetes Kegelrad zwei als Tellerräder ausgebildete Kegelräder antreibt bzw. durch diese angetrieben wird. Die Leistungszusammenführung erfolgt hierbei durch ein mit den Tellerrädern verbundenes mehrstufiges Planetengetriebe. Nachteilig wirkt sich aus, dass insbesondere durch die aufwändige Anordnung des mehrstufigen Planetengetriebes, mit mehreren auf einer Planetenachse nebeneinander liegenden Planeten, zum einen das Bauvolumen sehr groß und zum anderen eine hohe Teilevielfalt vorhanden ist. Auch hier wirken sich diese Eigenschaften für den Einsatz in Verbindung mit Differentialgetrieben eher als nachteilig aus.

Die der Erfindung zugrunde liegende Aufgabe wird darin gesehen, ein leistungsverzweigtes Winkelgetriebe der eingangs genannten Art anzugeben, durch welches die vorgenannten Probleme überwunden werden. Insbesondere soll ein Winkelgetriebe geschaffen werden, das bei geringem Bauraum und geringer Teilevielfalt eine hohe Leistungsübertragung ermöglicht und eine geringe Durchbiegung der An- bzw. der Abtriebswellen aufweist. Des Weiteren soll insbesondere die Ausführung des Winkelgetriebes derart erfolgen, dass eine Integration eines Achsendantriebs erfolgen kann, ohne wesentliche konstruktive Einschränkungen einzugehen.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß ist ein leistungsverzweigtes Winkelgetriebe der eingangs genannten Art mit einem als einfaches Planetengetriebe ausgebildeten Summierungsgetriebe versehen, wobei die auf das erste und das zweite Kegelrad verteilten Leistungszweige in dem Planetengetriebe wieder zusammengeführt werden. Dadurch, dass das Zwischenkegelrad gleichzeitig auf entgegengesetzten Seiten mit zwei spiegelbildlich gegenüberliegenden Kegelrädern kämmt, verteilen sich die zu übertragenden Kräfte auf zwei Leistungszweige. Dadurch wird die Werkstoffbelastung bei gleichbleibender Leistungsübertragung deutlich reduziert bzw. die Leistungsübertragung kann bei gleichbleibenden Werkstoffbelastungen deutlich erhöht werden. Des Weiteren erfolgt durch den beidseitigen Eingriff am Zwischenkegelrad eine beidseitige Abstützung des Zwischenkegelrades. Dies führt zu deutlich reduzierten Durchbiegungen an der Kegelradachse und ermöglicht dadurch eine optimierte Lagerung der Kegelradwelle. Die Leistungszusammenführung erfolgt über das als einfaches Planetengetriebe ausgebildete Summierungsgetriebe. Ein einfaches bzw. einstufiges Planetengetriebe enthält dabei ein Sonnenrad, ein Hohlrad, einen Satz Planeten, die das Sonnenrad umwälzen, sowie einen Planetenträger, der die Planeten trägt bzw. auf dem die Planeten gelagert sind. Das Planetengetriebe ist somit in einfachster Form ausgebildet. Durch das einfache bzw. einstufige Planetengetriebe können in kompakter Bauweise sehr hohe Untersetzungen bzw. Übersetzungen erzielt werden. Insbesondere für den Einsatz in Antriebssträngen, vorzugsweise in Verbindung mit Differentialgetrieben, sind diese Eigenschaften von besonderem Vorteil. Bei einem erfindungsgemäßen leistungsverzweigten Winkelgetriebe können die Leistungszweige, die über die Kegelräder übertragen werden, in mehreren Kombinationen auf dem Planetengetriebe wieder zusammengeführt werden. So können beispielsweise die Leistungszweige eingangsseitig über Planetenträger und Hohlrad zusammengefügt werden, so dass der Abtrieb über das Sonnenrad erfolgen kann. Des Weiteren ist eingangsseitig auch die Kombination Planetenträger/Sonnenrad denkbar, so dass der Abtrieb über das Hohlrad erfolgt. Für jede der möglichen Kombinationen stellen sich dabei im Planetengetriebe unterschiedliche Drehzahl- und Drehmomentenverläufe ein.

In einer besonders bevorzugten Ausgestaltung der Erfindung erfolgt die Zusammenführung der Leistungszweige auf dem Planetenträger des Planetengetriebes, so dass der Abtrieb über den Planetenträger bzw. Steg erfolgt. Ein in dieser Konfiguration ausgebildetes leistungsverzweigtes Winkelgetriebe eignet sich vorzugsweise für den Einsatz im Antriebsstrang eines Fahrzeugs. Da ein Leistungszweig über das Hohlrad und der andere Leistungszweig über die Sonne geführt wird und beide auf dem Planetenträger bzw. Steg zusammengeführt werden, stellen sich insbesondere in Verbindung mit Differentialgetrieben innerhalb oder außerhalb eines Antriebsstranges besonders vorteilhafte Drehmoment- und Drehzahlverläufe bei kompakter Bauweise ein.

In einer besonders bevorzugten Ausgestaltung der Erfindung ist das erste und das zweite Kegelrad als Tellerrad ausgebildet. Die Tellerräder können gegenüber dem Zwischenkegelrad deutlich größere Durchmesser aufweisen, was zu sehr hohen Untersetzungen bzw. Übersetzungen führen kann. Doch auch bei geringen Tellerraddurchmessern und der damit verbundenen vorteilhaften geringen Baugröße werden mit Hilfe des nachgeschalteten einstufigen Planetengetriebes hohe Untersetzungen bzw. Übersetzungen erzielt, da das nachgeschaltete Planetengetriebe nochmals deutlich weiter auf geringem Bauraum unter- bzw. übersetzt.

In einer weiteren besonders bevorzugten Ausgestaltung der Erfindung ist ein erstes Kegelrad fest mit einem als Sonnenrad des Planetengetriebes wirkenden Zahnrad und ein zweites Kegelrad fest mit einem Hohlrad des Planetengetriebes verbunden. Vorzugsweise ist dabei an bzw. auf der Drehachse des ersten Kegelrades ein Zahnrad bzw. eine Verzahnung ausgebildet, das bzw. die als Sonne des einstufigen Planetengetriebes wirkt und direkt mit den Planeten des Planetengetriebes in Eingriff steht. Dabei kann die Sonne in den Hohlraum des am zweiten Kegelrad ausgebildeten Hohlrads ragen. Auf der radial äußeren Seite der umlaufenden Planetenräder greift die Verzahnung des Hohlrades ein. In dieser bevorzugten Ausgestaltung der Erfindung ist das zweite Kegelrad als ein kombiniertes Tellerrad/Hohlrad ausgebildet. Dabei weist das Kegelrad sowohl eine Außenverzahnung als Tellerrad als auch eine Innenverzahnung als Hohlrad auf. Durch diese Ausgestaltung der Erfindung wird ein Winkelgetriebe geschaffen, mit dem eine sehr kompakte Bauweise erzielt wird, da die Kegelräder als kombinierte Tellerrad/Sonne- und Tellerrad/Hohlrad-Anordnungen ausgebildet sind. Des Weiteren besitzt dieses Getriebe eine sehr hohe Leistungsdichte, da die Leistung auf zwei gegenläufige Zahnräder bzw. Kegelräder verteilt und über den Planetenträger bzw. über den Steg eines einstufigen Planetengetriebes wieder zusammengeführt wird. Insbesondere kann durch eine derartige erfindungsgemäße Ausbildung des Winkelgetriebes ein sehr hohes Untersetzungs- bzw. Übersetzungsverhältnis bei kompakter Bauweise erzielt werden. Die durch die Kegelradstufe erzielte Untersetzung bzw. Übersetzung wird zusätzlich durch die darauf folgende Planetengetriebestufe ergänzt. Das durch die Planetengetriebestufe zusätzlich erreichbare Untersetzungs- bzw. Übersetzungsverhältnis hängt dabei von dem Verhältnis des Sonnenraddurchmessers zum Hohlraddurchmesser ab. In Abhängigkeit dessen stellen sich die Umlaufdrehzahlen der Planetenräder und damit die Drehzahlen des Steges des Planetengetriebes ein.

Durch die kombinierte Ausführungen des ersten Kegelrades als Tellerrad und Sonnenrad und des zweiten Kegelrades als Tellerrad und Hohlrad, sowie durch die einstufige Ausführung der Planetenradstufe wird ferner ein leistungsverzweigtes Winkelgetriebe mit sehr wenigen und kompakt angeordneten Bauteilen geschaffen.

Bedingt durch die im Verhältnis zum Zwischenkegelrad großen Durchmesser der Tellerräder und durch das nachgeschaltete Planetengetriebe, können bei einem Antrieb des Zwischenkegelrades (Antriebsrad) eine hohe Untersetzung an der Ausgangswelle des Planetengetriebes bzw. am Steg und damit entsprechend geringe Drehzahlen und hohe Drehmomente erzielt werden.

Analog hierzu kann jedoch auch der Steg des Planetengetriebes als Antriebswelle genutzt werden und damit eine umgekehrte Wirkung, d.h. eine hohe Übersetzung zum Zwischenkegelrad (in diesem Falle Abtriebswelle) erzielt werden.

Eine bevorzugte Ausgestaltung der Erfindung sieht daher vor, dass der Antrieb des leistungsverzweigten Winkelgetriebes auch über das Summiergetriebe erfolgen kann und die Leistungszweige in der doppelten Kegelradstufe auf dem Zwischenkegelrad wieder zusammengeführt werden, wobei das Zwischenkegelrad mit einer Abtriebswelle verbunden ist.

Ein mit den vorhergehend genannten Eigenschaften ausgestattetes erfindungsgemäßes leistungsverzweigtes Winkelgetriebe, eignet sich daher in besonders bevorzugter Weise für den Einsatz in Kraftfahrzeugen, Land- und Baumaschinen bzw. Nutzfahrzeugen sowie auch für den Einsatz in Werkzeugmaschinen. Des Weiteren ist der Einsatz eines derartigen Winkelgetriebes insbesondere dort sinnvoll, wo Antriebskomponenten erforderlich sind, die eine kompakte Bauweise und hohe Untersetzungen bzw. Übersetzungen und damit eine hohe Leistungsübertragung aufweisen.

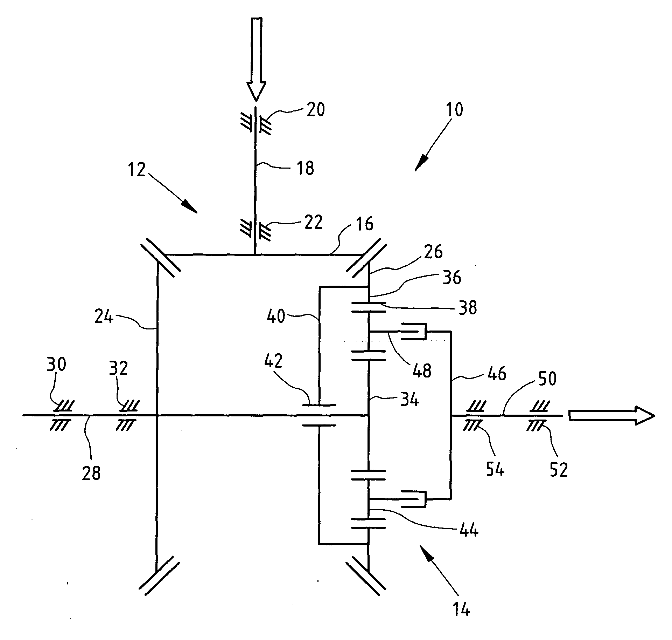

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Die einzige Figur zeigt eine schematische Darstellung eines erfindungsgemäßen leistungsverzweigten Winkelgetriebes.

Die Figur zeigt ein erfindungsgemäßes leistungsverzweigtes Winkelgetriebe 10, welches eine Kegelradstufe 12 und ein daran nachgeschaltetes einstufiges Planetengetriebe 14 enthält.

Die Kegelradstufe 12 weist ein Antriebskegelrad 16 auf, welches fest mit einer Antriebsachse 18 verbunden ist. Die Antriebsachse 18 ist auf zwei Wellenlagern 20, 22 gelagert. Das Antriebskegelrad 16 stellt ein Zwischenkegelrad dar, welches zwischen einem ersten Kegelrad 24 und einem zweiten Kegelrad 26 angeordnet ist und mit beiden gleichzeitig in Eingriff steht. Die von dem Antriebskegelrad 16 angetriebenen Kegelräder 24 und 26 sind spiegelbildlich zueinander angeordnet und besitzen demzufolge entgegengesetzte Drehrichtungen.

Das erste Kegelrad 24 ist als Tellerrad ausgebildet und weist einen deutlich größeren Durchmesser auf, als das Antriebskegelrad 16. Das erste Kegelrad 24 ist dabei fest mit einer Lagerachse 28 verbunden, welche auf einer Seite mit zwei Wellenlagern 30, 32 drehbar und axial fixiert gelagert ist. Auf der anderen Seite der Lagerachse 28 schließt sich ein Zahnrad 34 an, welches über die Lagerachse 28 fest mit dem ersten Kegelrad 24 verbunden ist.

Das zweite Kegelrad 26 weist einen kombinierten Aufbau auf. Zum einen ist es außen, spiegelbildlich zum ersten Kegelrad 24, ebenfalls als Tellerrad ausgebildet. Zum anderen ist es radial innen als Hohlrad 36 mit einer Hohlradverzahnung 38 ausgebildet. Über einen Haltesteg 40 und wenigstens ein Wellenlager 42 ist das zweite Kegelrad 26 auf der Lagerachse 28 drehbar und axial fixiert gelagert.

Das fest mit dem ersten Kegelrad 24 verbundene Zahnrad 34 sowie das Hohlrad 36 am zweiten Kegelrad 26 bilden somit Teile des einstufigen Planetengetriebes 14, wobei das Zahnrad 34 im Inneren des Hohlrades 36 positioniert ist und das Sonnenrad des Planetengetriebes 14 darstellt.

Zwischen dem Sonnenrad 34 und dem Hohlrad 36 sind auf dem Umfang verteilte umwälzende Planetenräder 44 angeordnet, die auf am Planetenträger 46 befestigten Planetenradzapfen 48 drehbar gelagert sind. Der Planetenträger 46 ist fest mit einer Abtriebsachse 50 verbunden, die mit wenigstens zwei Wellenlagern 52, 54 drehbar und axial fixiert gelagert ist.

Bei der Ausbildung der einzelnen miteinander in Eingriff stehenden Getrieberäder 16, 24, 26, 34, 36 und 44 kann es sich sowohl um verzahnte Räder als auch um Reibräder handeln.

Die über die Antriebsachse 18 eingeleitete Leistung (Drehmoment, Drehzahl) wird über das Zwischenkegelrad 16 gleichmäßig in zwei Leistungszweigen auf das erste Kegelrad 24 und das dazu entgegengesetzt drehende zweite Kegelrad 26 übertragen. Da die Kegelräder 24, 26 deutlich größer ausgebildet sind als das Zwischenkegelrad 16 findet hier eine erste Drehzahlabnahme bzw. Untersetzung statt. Über die direkt mit dem ersten Kegelrad 24 verbundene Sonne 34 des Planetengetriebes 14 wird der eine Leistungszweig zu den Planeten 44 des Planetengetriebes 14 geleitet. Der zweite Leistungszweig wird über das direkt mit dem zweiten Kegelrad 26 verbundene Hohlrad 36 ebenfalls zu den Planeten geleitet. Aufgrund der entgegengesetzten Drehrichtung von Sonnenrad 34 und Hohlrad 36 wälzen die Planeten 44 zwischen Sonnenrad 34 und Hohlrad 36 ab und summieren die beiden Leistungszweige auf dem Planetenträger 46 des Planetengetriebes 14, wobei dieser sich entsprechend der Relativbewegung der Planeten bzw. entsprechend des Durchmesserverhältnisses von Sonnenrad 34 und Hohlrad 38 mit deutlich geringerer Drehzahl dreht. Durch das einstufige Planetengetriebe 14 wird somit eine zweite Drehzahlreduzierung bzw. Untersetzung erzielt.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen. So kann beispielsweise der Kraftschluss in umgekehrter Richtung erfolgen, so dass über den Planetenträger 46 des Planetengetriebes 14 angetrieben wird und eine Übersetzung in Richtung der Kegelradstufe 12 erfolgt. In diesem Fall wäre die bisher beschriebene Antriebsachse 18 die Abtriebsachse, und die bisher beschriebene Abtriebsachse 50 am Planetenträger 46 wäre die Antriebsachse des leistungsverzweigten Winkelgetriebes 10.

## Patentansprüche

1. Leistungsverzweigtes Winkelgetriebe mit einer doppelten Kegelradstufe (12) und einem der Kegelradstufe (12) nachgeschalteten Summierungsgetriebe (14), wobei die Kegelradstufe (12) durch ein Zwischenkegelrad (16) angetrieben wird und ein erstes und ein zweites Kegelrad (24, 26) enthält, und wobei die Kegelräder (24, 26) spiegelbildlich zueinander angeordnet sind und gegenläufig abwälzen, **dadurch gekennzeichnet, dass** das Summierungsgetriebe (14) als einfaches bzw. einstufiges Planetengetriebe ausgebildet ist und die auf das erste und das zweite Kegelrad (24, 26) verteilten Leistungszweige in dem Planetengetriebe zusammengeführt werden.

2. Winkelgetriebe nach Anspruch 1, **dadurch gekennzeichnet, dass** die Leistungszweige auf dem Planetenträger (46) des Planetengetriebes (14) zusammengeführt werden.

3. Winkelgetriebe nach Anspruch 1 oder 2, **dadurch gekennzeichnet, dass** das erste und das zweite Kegelrad (24, 26) als Tellerrad ausgebildet ist.

4. Winkelgetriebe nach einem der vorhergehenden Ansprüche, **dadurch gekennzeichnet, dass** das erste Kegelrad (24) fest mit einem als Sonnenrad des Planetengetriebes (14) wirkenden Zahnrad (34) und das zweite Kegelrad (26) fest mit einem Hohlrad (36) des Planetengetriebes (14) verbunden ist.

5. Winkelgetriebe nach einem der vorhergehenden Ansprüche, **dadurch gekennzeichnet, dass** eines der Kegelräder (26) als ein kombiniertes Tellerrad/Hohlrad ausgebildet ist und sowohl eine Außenverzahnung als Tellerrad (26) als auch eine Innenverzahnung (38) als Hohlrad (36) aufweist.

6. Winkelgetriebe nach einem der vorhergehenden Ansprüche, **dadurch gekennzeichnet, dass** der Antrieb über das Summiergetriebe (14) erfolgt und die Leistungszweige in der doppelten Kegelradstufe (12) auf dem Zwischenkegelrad (16) wieder zusammengeführt werden.
